(19) Europäisches Patentamt
European Patent Office
Office européen des brevets

(11) **EP 3 367 064 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(51) Int Cl.:
***G01C 22/00*** *(2006.01)*     ***G01C 21/36*** *(2006.01)*
***B60Q 1/50*** *(2006.01)*

(21) Anmeldenummer: **18150619.7**

(22) Anmeldetag: **08.01.2018**

(54) **VERFAHREN ZUR DARSTELLUNG EINER AKTUELLEN LAGE DES WINDSCHATTENS EINES FAHRZEUGS, STEUERGERÄT UND FAHRZEUG**

METHOD FOR DISPLAYING THE CURRENT POSITION OF THE SLIPSTREAM OF A VEHICLE, CONTROLLER DEVICE AND VEHICLE

PROCÉDÉ DE REPRÉSENTATION D'UN EMPLACEMENT ACTUEL DU CÔTÉ SOUS LE VENT D'UN VÉHICULE, APPAREIL DE COMMANDE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2017 DE 102017203097**

(43) Veröffentlichungstag der Anmeldung:
**29.08.2018 Patentblatt 2018/35**

(73) Patentinhaber: **Robert Bosch GmbH**
**70442 Stuttgart (DE)**

(72) Erfinder:
• DACKERMANN, Tim
**72072 Tuebingen (DE)**
• GREINER, Rinaldo
**72762 Reutlingen (DE)**

(56) Entgegenhaltungen:
**DE-A1- 10 361 969**     **DE-A1-102014 210 952**
**US-A1- 2009 312 923**     **US-A1- 2010 283 590**

EP 3 367 064 B1

**Beschreibung**

Die vorliegende Erfindung betrifft ein Verfahren zur Darstellung einer aktuellen Lage eines Windschattens eines Fahrzeugs, ein Steuergerät und das Fahrzeug mit dem Steuergerät, insbesondere ein Elektrofahrrad.

Stand der Technik

Die Schrift DE 10 2011 076 574 A1 beschreibt eine Vorrichtung zur Informationsanzeige bzw. ein Verfahren, welches diese Vorrichtung steuert. Mittels der Vorrichtung bzw. des Verfahrens wird ein Betriebsparameter des Fahrzeugs auf die Fahrbahn projiziert.

Die Schrift US2010/0283590 beschreibt eine Vorrichtung zur Projizierung einer linken und einer rechten Fahrradwegbegrenzungslinie sowie eines Fahrradwegsymbols auf den dem Fahrrad dahinterliegenden Untergrund um nachfolgende Fahrradfahrer zu warnen.

Zur Unfallvermeidung ist für Fahrräder eine statische Projizierung nach vorne auf einen Untergrund einer Fahrtstrecke bekannt, beispielsweise wird ein grünes Fahrrad vor dem Fahrrad als Hinweis für andere Verkehrsteilnehmer auf den Untergrund projiziert. Außerdem ist eine statische Projizierung einer Spurbreite des Fahrrads auf den Untergrund der Fahrtstrecke bekannt, beispielsweise wird eine rote Begrenzung der Spur des Fahrrads mittels eines Lasers auf den Untergrund projiziert.

Ein Fahrer eines Fahrzeugs muss beim Fahren sowohl einen Rollwiderstand zwischen den mindestens zwei Reifen und dem Untergrund der Fahrtstrecke sowie einen Strömungswiderstand einer das Fahrzeug umströmenden Luft überwinden. Der Strömungswiderstand kann größer als der Rollwiderstand sein. Im Windschatten eines vorausfahrenden Fahrzeugs wird der Strömungswiderstand eines nachfolgenden Fahrzeugs, d.h. eines Verfolgers, erheblich reduziert, wodurch der zum Fahren benötigte Energieverbrauch für den Verfolger sinkt.

Die Lage des Windschattens des vorausfahrenden Fahrzeugs verändert sich beispielsweise in Abhängigkeit der Geschwindigkeit, der Windrichtung und der Windstärke. Die genaue Lage ist für einen Verfolger, welcher im Windschatten fahren möchte, manchmal schwer einzuschätzen. Windschattenfahren ist des Weiteren für den Fahrer des vorausfahrenden Fahrzeugs und für den Verfolger gefährlich, weil das Sichtfeld des Verfolgers in der Regel eingeschränkt ist und ein geringer Abstand des Verfolgers zum vorausfahrenden Fahrzeug vorliegt.

Der vorliegenden Erfindung liegt die Aufgabe zugrunde, das Windschattenfahren schneller zu erlernen und das Windschattenfahren sicherer zu gestalten.

Offenbarung der Erfindung

Die vorliegende Erfindung betrifft ein Verfahren zur Darstellung einer aktuellen Lage eines Windschattens eines Fahrzeugs auf einem Untergrund einer Fahrtstrecke für ein nachfolgendes Fahrzeug bzw. einen Verfolger. Die Erfindung betrifft auch ein Steuergerät und das Fahrzeug mit dem Steuergerät.

Das erfindungsgemäße Fahrzeug, beispielsweise ein Elektrofahrrad, weist einen Geschwindigkeitssensor auf. Der Geschwindigkeitssensor ist dazu eingerichtet, eine aktuelle Geschwindigkeit des Fahrzeugs zu erfassen. Das Fahrzeug weist außerdem einen Projektor auf. Der Projektor ist dazu eingerichtet, wenigstens eine ermittelte aktuelle Lage des Windschattens des Fahrzeugs in Richtung der Längsachse des Fahrzeugs nach hinten und in Richtung der Hochachse des Fahrzeugs nach unten auf einen Untergrund einer Fahrtstrecke zu projizieren und die Projizierung der ermittelten aktuellen Lage anzupassen. Die Anpassung der projizierten Lage des Windschattens in Abhängigkeit der Geschwindigkeit erfolgt bevorzugt kontinuierlich. Das Fahrzeug umfasst auch das erfindungsgemäße Steuergerät zur Ansteuerung des Projektors.

Optional umfasst das Fahrzeug eine Eingabevorrichtung, welche ebenfalls am Fahrzeug angeordnet und dazu eingerichtet ist, wenigstens eine erste Eingabe einer den Strömungswiderstand in Fahrtrichtung repräsentierenden Stirnflächengröße des Fahrzeugs mit dem Fahrer durch den Fahrer zu erfassen.

Das Fahrzeug kann optional einen Windsensor umfassen, wobei der Windsensor dazu eingerichtet ist, wenigstens eine aktuelle Windrichtung und/oder eine aktuelle Windstärke zu erfassen. Ein optionaler Nickwinkelsensor am Fahrzeug ist dazu eingerichtet, einen aktuellen Nickwinkel des Fahrzeugs um die Querachse des Fahrzeugs zu erfassen. Am Fahrrad können außerdem optional ein Temperatursensor zur Erfassung einer aktuellen Umgebungstemperatur und/oder ein Luftdrucksensor zur Erfassung eines aktuellen Luftdrucks vorgesehen sein. Ein ebenfalls optionaler Ortssensor am Fahrrad ist dazu eingerichtet, die aktuellen geografischen Koordinaten des Fahrzeugs zu erfassen. Es kann des Weiteren vorgesehen sein, einen Abstandssensor am Fahrrad anzuordnen. Der Abstandssensor ist dazu eingerichtet, einen aktuellen Abstand des Fahrzeugs zu einem in Richtung der Längsachse nachfolgenden Fahrzeug bzw. einem Verfolger zu erfassen. Außerdem kann das Fahrrad eine Anzeigevorrichtung umfassen, wobei die Anzeigevorrichtung dazu eingerichtet ist, dem Fahrer des Fahrzeugs die erfasste Geschwindigkeit und/oder den erfassten Nickwinkel und/oder die erfassten Windgröße und/oder den erfassten Luftdruck und/oder die erfasste Umgebungstemperatur und/oder die ermittelte Lage des Windschattens des Fahrzeugs und/oder die erfassten geografischen Koordinaten und/oder bestimmte Navigationsdaten und/oder den erfassten Abstand des Fahrzeugs zu einem Verfolger anzuzeigen.

Das erfindungsgemäße Verfahren zur Darstellung einer aktuellen Lage eines Windschattens eines Fahrzeugs umfasst eine Erfassung einer aktuellen Geschwindigkeit des Fahrzeugs mittels des Geschwindigkeitssensors. In einem weiteren Schritt wird die den Strömungswiderstand in Fahrtrichtung repräsentierende Stirnflächengröße erfasst. Die Erfassung der Stirnflächengröße erfolgt beispielsweise durch die erste Eingabe des Fahrers mittels der Eingabevorrichtung oder durch ein Auslesen eines Speichers, welcher im Steuergerät vorgesehen sein kann. Anschließend wird die aktuelle Lage des Windschattens des Fahrzeugs in Abhängigkeit der erfassten Geschwindigkeit und der erfassten Stirnflächengröße mittels des Steuergeräts ermittelt. In einem nachfolgenden Schritt wird eine erste Projizierung der ermittelten Lage des Windschattens in Richtung der Längsachse des Fahrzeugs nach hinten und in Richtung der Hochachse des Fahrzeugs nach unten auf einen Untergrund einer Fahrtstrecke mittels des Projektors durchgeführt. Insbesondere wird durch die erste Projizierung eine Begrenzung der ermittelten Lage des Windschattens auf dem Untergrund der Fahrtstrecke dargestellt. Das erfindungsgemäße Verfahren wird bevorzugt kontinuierlich durchgeführt, d.h. die projizierte Lage des Windschattens wird kontinuierlich in Abhängigkeit der erfassten Geschwindigkeit während der Fahrt angepasst. Dadurch kann beispielsweise der Verfolger vorteilhafterweise den Windschattenbereich des vorausfahrenden Fahrzeuges gut einschätzen und das nachfolgende Fahrzeug leicht im Windschattenbereich des vorausfahrenden Fahrzeuges halten, wodurch der Energieaufwand des Verfolgers erheblich reduziert wird.

In einer bevorzugten Ausgestaltung weist das Verfahren eine Erfassung mindestens einer aktuellen Windgröße mittels des Windsensors auf, insbesondere werden die aktuelle Windstärke und/oder die aktuelle Windrichtung erfasst. In dieser Ausgestaltung erfolgt die Ermittlung der Lage des Windschattens zusätzlich unter Berücksichtigung der erfassten Windgröße, wodurch die ermittelte Lage und die projizierte Lage des Windschattens vorteilhafterweise an den Wind angepasst wird.

Der Strömungswiderstand und die Lage sowie die Größe des Windschattens werden vom aktuellen Luftdruck und der aktuellen Umgebungstemperatur beeinflusst. In einer Weiterführung umfasst das Verfahren deshalb eine Erfassung einer aktuellen Umgebungsgröße, insbesondere des aktuellen Luftdrucks und/oder der aktuellen Umgebungstemperatur. Die Ermittlung der Lage des Windschattens wird in dieser Weiterführung zusätzlich unter Berücksichtigung der erfassten Umgebungsgröße durchgeführt. Dadurch entsteht der Vorteil, dass die ermittelte Lage des Windschattens des Fahrzeugs genauer ist.

In einer weiteren Ausgestaltung ist eine Erfassung des aktuellen Nickwinkels des Fahrzeugs mittels des Nickwinkelsensors vorgesehen. Der Nickwinkel repräsentiert eine Lage des Fahrzeugs in einer Ebene, welche durch die Längsachse und die Hochachse des Fahrzeugs aufgespannt wird, bzw. eine Drehung um eine zu dieser Ebene senkrechte Querachse des Fahrzeugs bzw. einen aus der Drehung um die Querachse resultierenden Drehwinkel des Fahrzeugs, beispielsweise bezogen auf die Horizontale. Die Ermittlung der Lage des Windschattens erfolgt in dieser Ausgestaltung zusätzlich in Abhängigkeit des erfassten Nickwinkels. Dadurch kann die Lage des Windschattens auch an einem Hang genau ermittelt und auf den Untergrund der Fahrtstrecke projiziert werden.

Vorzugsweise wird ein Navigationshinweis in Abhängigkeit einer zweiten Eingabe des Fahrers, einer Bildanalyse eines mittels einer Kamera erfassten Kamerabildes und/oder von Navigationsdaten bestimmt. Die optionale Kamera ist beispielsweise am Rahmen des Fahrzeugs, an einem Fahrradhelm des Fahrers oder an einem Smartphone angeordnet und erfasst ein Kamerabild in Fahrtrichtung. Die Navigationsdaten können beispielsweise geografische Kartendaten sein, welche bevorzugt fahrradspezifische Daten und/oder ortsaufgelöste Warnhinweise umfassen. Der Navigationshinweis ist beispielsweise eine Warnung des Verfolgers vor Schlaglöchern, Glätte auf der Fahrtstrecke, einem bevorstehendes Abbiegen des Fahrzeugs, eine enge Kurve in Fahrtrichtung und/oder entgegenkommendem Verkehr etc.. In dieser Ausgestaltung erfolgt eine zweite Projizierung des bestimmten Navigationshinweises in Richtung der Längsachse des Fahrzeugs nach hinten und in Richtung der Hochachse des Fahrzeugs nach unten auf den Untergrund der Fahrtstrecke mittels des Projektors. Durch die zweite Projizierung wird dem Verfolger zusätzlich zur Lage des Windschattens eine sicherheitsrelevante Information bzw. eine Informationen zur Navigation am Untergrund der Fahrtstrecke angezeigt, wodurch das Windschattenfahren sicherer wird.

In einer anderen Weiterführung wird ein aktueller Abstand des Fahrzeugs zu einem Verfolger mittels eines Abstandssensors erfasst. Anschließend erfolgt eine dritte Projizierung des erfassten Abstands in Richtung der Längsachse des Fahrzeugs nach hinten und in Richtung der Hochachse des Fahrzeugs nach unten auf den Untergrund der Fahrtstrecke mittels des Projektors. In dieser Ausgestaltung kann der Verfolger das Windschattenfahren besser trainieren. Außerdem kann in dieser Ausgestaltung dem Fahrer des Fahrzeugs optional der erfasste Abstand zum Verfolger mittels der optionalen Anzeigevorrichtung angezeigt werden, wodurch der Fahrer eine Rückmeldung zur Anwesenheit des Verfolgers erhält ohne sich umschauen zu müssen.

In einer besonders bevorzugten Ausgestaltung überlappen sich die projizierte Lage des Windschattens und/oder der projizierte Navigationshinweis und/oder der projizierte Abstand auf dem Untergrund der Fahrtstrecke zumindest teilweise.

Die Erfindung betrifft auch das Steuergerät zur Darstellung der ermittelten aktuellen Lage des Windschattens des Fahrzeugs. Das Steuergerät weist mindestens eine Recheneinheit auf. Die Recheneinheit erfasst ein erstes Sensorsignal und die Stirnflächengröße, welche den Strömungswiderstand des Fahrzeugs mit dem Fahrer repräsentiert. Das erste Sensorsignal wird von dem Geschwindigkeitssensor erzeugt und repräsentiert die aktuelle Geschwindigkeit des Fahrzeugs. Die Stirnflächengröße kann durch ein erstes Eingabesignal erfasst werden, welches von der optionalen Eingabevorrichtung erzeugt wird. Alternativ wird die Stirnflächengröße aus einem optionalen Speicher des Steuergeräts erfasst bzw. ausgelesen. Die Recheneinheit ermittelt außerdem die Lage des Windschattens in Abhängigkeit des erfassten ersten Sensorsignals und der erfassten Stirnflächengröße. Anschließend erzeugt die Recheneinheit ein Steuersignal zur Ansteuerung des Projektors in Abhängigkeit der ermittelten Lage des Windschattens, wobei eine erste Projizierung (391) der ermittelten Lage des Windschattens, insbesondere einer Begrenzung der ermittelten Lage, in Richtung der Längsachse des Fahrzeugs (100) nach hinten und in Richtung der Hochachse des Fahrzeugs (100) nach unten auf einen Untergrund (150) einer Fahrtstrecke mittels des Projektors (103) erfolgt.

Das Steuergerät kann in einer Ausgestaltung auch wenigstens ein zweites Sensorsignal erfassen, wobei das zweite Sensorsignal die aktuelle Windgröße repräsentiert. In dieser Ausgestaltung ermittelt die Recheneinheit die Lage des Windschattens zusätzlich in Abhängigkeit des erfassten zweiten Sensorsignals.

In einer Weiterführung bestimmt die Recheneinheit den Navigationshinweis unter Berücksichtigung eines erfassten zweiten Eingabesignals, welches beispielsweise mittels der ersten Eingabevorrichtung oder einer zweiten Eingabevorrichtung am Fahrrad durch die zweite Eingabe des Fahrers erzeugt wird. Der Navigationshinweis kann alternativ in Abhängigkeit einer Bildverarbeitung bzw. Bildanalyse eines erfassten Kamerasignals der Kamera und/oder von Navigationsdaten, insbesondere von GPSbasierten Karten- und/oder Routendaten, bestimmt werden. In dieser Weiterführung erzeugt die Recheneinheit das Steuersignal zur Ansteuerung des Projektors in Abhängigkeit des bestimmten Navigationshinweises.

In einer weiteren Ausgestaltung erfasst die Recheneinheit optional ein drittes Sensorsignal, wobei das dritte Sensorsignal mittels des Abstandssensors erzeugt wird und den aktuellen Abstand des Fahrzeugs zu einem Verfolger repräsentiert. Die Recheneinheit erzeugt in dieser Ausgestaltung das Steuersignal zur Ansteuerung des Projektors auch in Abhängigkeit des dritten Sensorsignals.

In einer bevorzugten, optionalen Ausgestaltung weist das Steuergerät einen Ortssensor auf, wobei der Ortssensor dazu eingerichtet ist, die aktuellen geografischen Koordinaten des Fahrzeugs zu erfassen. Das Steuergerät umfasst in dieser Ausgestaltung außerdem eine Empfangsvorrichtung, wobei die Empfangsvorrichtung dazu eingerichtet ist, Serverdaten zur aktuellen Umgebungstemperatur, zum aktuellen Luftdruck und/oder zu aktuellen Navigationsdaten von einer Servereinrichtung in Abhängigkeit der erfassten geografischen Koordinaten des Fahrzeugs zu empfangen. In dieser Ausgestaltung können beispielsweise aktuelle Navigationsdaten dem Verfolger angezeigt werden, beispielsweise die aktuelle Windrichtung an der aktuellen geografischen Koordinate oder eine Baustelle oder ein Unfall auf der bevorstehenden Fahrtstrecke des Fahrzeugs bzw. des Verfolgers.

Die vorliegende Erfindung wird nachfolgend anhand bevorzugter Ausführungsformen und beigefügter Zeichnungen erläutert.

Figur 1:     Elektrofahrrad als Fahrzeug

Figur 2:     Blockschaltbild des Steuergerätes

Figur 3:     Ablaufdiagramm des Verfahrens

Figur 4:     Projizierte Lage des Windschattens aus einer Vogelperspektive

Figur 5:     Projektor für das Verfahren am Sattelrohr eines Elektrofahrrads

Ausführungsbeispiele

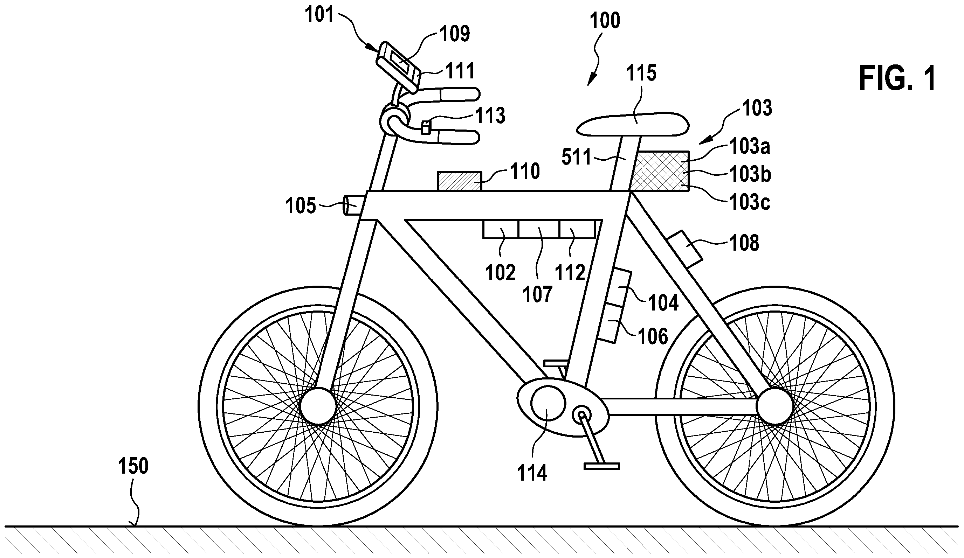

Figur 1 zeigt ein Elektrofahrrad 100 als Fahrzeug. Am Elektrofahrrad 100 sind mindestens ein Steuergerät 101, ein Geschwindigkeitssensor 102 und ein Projektor 103 sowie optional eine Eingabevorrichtung 111 angeordnet. Das Steuergerät 101 ist dazu eingerichtet, den Projektor 103 erfindungsgemäß anzusteuern. Bevorzugt kann das Steuergerät 101 zusätzlich dazu eingerichtet sein, einen Antriebsmotor des Elektrofahrrads 100 anzusteuern bzw. zu regeln. Der Geschwindigkeitssensor 102 ist bevorzugt ein Reed-Sensor oder ein GPS-Sensor. Das Elektrofahrrad 100 im Ausführungsbeispiel aus Figur 1 weist einen optionalen Windsensor 104 zur Erfassung einer aktuellen Windgröße auf, d.h. einer aktuellen Windrichtung und/oder einer aktuellen Windstärke. Das Elektrofahrrad 100 umfasst auch einen optionalen Nickwinkelsensor 112. Der Nickwinkelsensor 112 ist dazu eingerichtet, einen Nickwinkel, d.h. einen Winkel einer Drehung des Elektrofahrrads 100 um eine Querachse des Elektrofahrrads 100 zu erfassen. Beispielsweise ist der Nickwinkelsensor 112 ein Drehratensensor oder eine inertiale Messeinheit. Mittels eines Temperatursensors 106 am Elektrofahrrad 100 kann eine aktuelle Umgebungstemperatur erfasst werden. Es kann außerdem ein Luftdrucksensor 107 zur Erfassung eines aktuellen Luftdrucks am Elektrofahrrad 100 angeordnet sein. Das Elektrofahrrad 100 umfasst des Weiteren einen optionalen Ortssensor 110, welcher dazu eingerichtet ist, die aktuellen geografischen Koordinaten des Elektrofahrrads 100 zu erfassen, beispielsweise ist der Ortssensor 110 ein GPS-Sensor. An dem Elektrofahrrad 100 ist zusätzlich ein Abstandssensor 108, beispielsweise ein Ultraschallsensor, angeordnet, wobei der Abstandssensor 108 dazu eingerichtet ist, einen aktuellen Abstand des Elektrofahrrads 100 zu einem in Richtung der Längsachse nachfolgenden Fahrzeug, d.h. einem Verfolger, zu erfassen. Die Anordnung der Sensoren 102, 104, 112, 106, 107, 110 und/oder 108 kann variieren, beispielsweise kann ein Sensor 102, 104, 112, 106, 107, 110 und/oder 108 in einem Gehäuse des Steuergeräts 101, in einem Gehäuse eines Batteriemoduls eines Antriebssystems des Elektrofahrrads 100 oder in einem Gehäuse eines Antriebsmotors des Elektrofahrrads 100 oder am bzw. im Rahmen des Elektrofahrrads 100 angeordnet sein. Am Elektrofahrrad 100 aus Figur 1 ist eine optionale Anzeigevorrichtung 109 angeordnet. Die Anzeigevorrichtung 109 ist beispielsweise ein LCD-Display. Die Anzeigevorrichtung 109 ist bevorzugt in einem Gehäuse des Steuergeräts 101 des Elektrofahrrads 100 am Lenker des Elektrofahrrads 100 angeordnet. Die Anzeigevorrichtung 109 ist dazu eingerichtet, dem Fahrer des Elektrofahrrads 100 die erfasste Geschwindigkeit und/oder den erfassten Nickwinkel, die erfasste Windgröße und/oder den erfassten Luftdruck und/oder die erfasste Umgebungstemperatur und/oder eine ermittelte Lage des Windschattens und/oder die erfassten geografischen Koordinaten und/oder einen bestimmten Navigationshinweis und/oder den erfassten Abstand zum Verfolger anzuzeigen. Darüber hinaus ist in dem Beispiel aus Figur 1 eine Kamera 105 am Rahmen des Elektrofahrrads 100 angeordnet. Alternativ kann die Kamera auch beispielsweise in einem Gehäuse des Steuergeräts 101 angeordnet sein. Die Kamera 105 erfasst beispielsweise ein Kamerabild in Richtung der Längsachse des Elektrofahrrads 100 nach vorne. Das erfasste Kamerabild der Kamera 105 kann mit bekannten Bildanalyseverfahren zur Bestimmung von Navigationshinweisen ausgewertet werden.

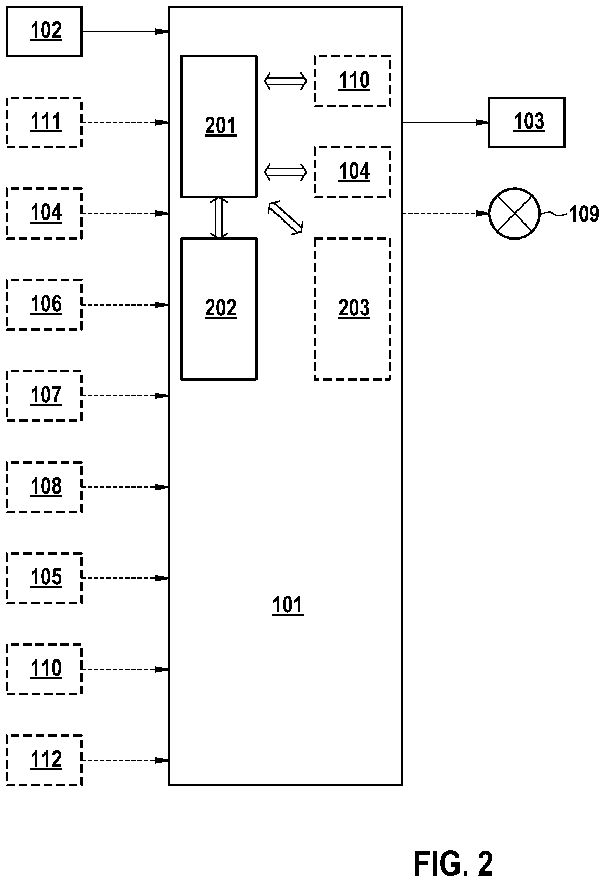

In Figur 2 ist ein Blockschaltbild des Steuergerätes 101 dargestellt, welches dazu eingerichtet ist, den Projektor 103 erfindungsgemäß anzusteuern. Bevorzugt umfasst das Steuergerät 101 die Anzeigevorrichtung 109 und ist an einem Lenker eines Elektrofahrrads 100 angeordnet sowie dazu eingerichtet, zusätzlich einen Antriebsmotor 114 des Elektrofahrrads 100 anzusteuern bzw. zu regeln. Das Steuergerät 101 weist eine Recheneinheit 201 auf. Optional kann das Steuergerät 101 zusätzlich einen Geschwindigkeitssensor 104, beispielsweise einen GPS-Sensor, und/oder einen Speicher 203 und/oder eine Empfangsvorrichtung 202 aufweisen. Die Empfangsvorrichtung 202 ist dazu eingerichtet, Serverdaten zur aktuellen Umgebungstemperatur, zum aktuellen Luftdruck und/oder zu aktuellen Navigationsdaten von einer entfernten Servereinrichtung in Abhängigkeit der mittels des Ortssensors 110 erfassten geografischen Koordinaten des Elektrofahrrads bzw. Fahrzeugs 100 per Funk zu empfangen. Es kann dazu vorgesehen sein, dass das Steuergerät 101 den Ortssensor 110 umfasst. Die Recheneinheit 201 aus Figur 2 erfasst ein erstes Sensorsignal von dem Geschwindigkeitssensor 102 und eine Stirnflächengröße A, wobei die Stirnflächengröße A insbesondere durch Erfassung eines ersten Eingabesignals von der Eingabevorrichtung 111 erfasst wird. Alternativ wird die Stirnflächengröße A aus einem Speicher 203 ausgelesen. Die Recheneinheit 201 ermittelt eine Lage des Windschattens und erzeugt ein Steuersignal zur Ansteuerung des Projektors 103 in Abhängigkeit der ermittelten Lage bzw. in Abhängigkeit des ersten Sensorsignals und der erfassten Stirnflächengröße A, insbesondere des ersten Eingabesignals. Es kann vorgesehen sein, dass die Recheneinheit 201 außerdem wenigstens ein zweites Sensorsignal erfasst. Das mindestens eine zweite Sensorsignal wird von dem Windsensor 104, dem Temperatursensor 106 und/oder dem Luftdrucksensor 107 erzeugt und repräsentiert die aktuelle Windrichtung, die aktuelle Windstärke, die aktuelle Umgebungstemperatur und/oder den aktuellen Luftdruck. Es kann vorgesehen sein, dass die Recheneinheit 201 zusätzlich wenigstens ein drittes Sensorsignal erfasst, welches von dem Abstandssensor 108 und/oder von dem Nickwinkelsensor 112 erzeugt wird. Das mindestens eine dritte Sensorsignal repräsentiert den aktuellen Abstand des Elektrofahrrads 100 zu einem Verfolger 400 und/oder den erfassten Nickwinkel des Elektrofahrrads 100 um die Querachse des Elektrofahrrads 100. Die Recheneinheit 201 kann außerdem eine zweite Eingabe des Fahrers mittels der ersten Eingabevorrichtung 111 und/oder einer zweiten Eingabevorrichtung 113 erfassen, wobei die zweite Eingabe einen Navigationshinweis repräsentiert. Die zweite Eingabevorrichtung 113 kann beispielsweise ein Schalter sein, dessen Betätigung ein bevorstehendes Abbiegen repräsentiert. Der Navigationshinweis kann alternativ mittels eines erfassten Kamerasignals, welches das Kamerabild der Kamera 105 repräsentiert, und/oder in Abhängigkeit von den empfangenen Navigationsdaten bestimmt werden. Das Steuersignal zur Ansteuerung des Projektors 103 wird optional zusätzlich in Abhängigkeit des mindestens einen zweiten Sensorsignals und/oder des wenigstens einen dritten Sensorsignals und/oder des Kamerasignals und/oder des bestimmten Navigationshinweises erzeugt. In einer optionalen Ausgestaltung steuert die Recheneinheit 201 außerdem die Anzeigevorrichtung 109 zur Anzeige der erfassten Geschwindigkeit und/oder des erfassten Nickwinkels und/oder der erfassten Windgröße und/oder des erfassten Luftdrucks und/oder der erfassten Umgebungstemperatur und/oder der ermittelten Lage des Windschattens und/oder der erfassten geografischen Koordinaten und/oder des bestimmten Navigationshinweises und/oder des erfassten Abstands zum Verfolger an.

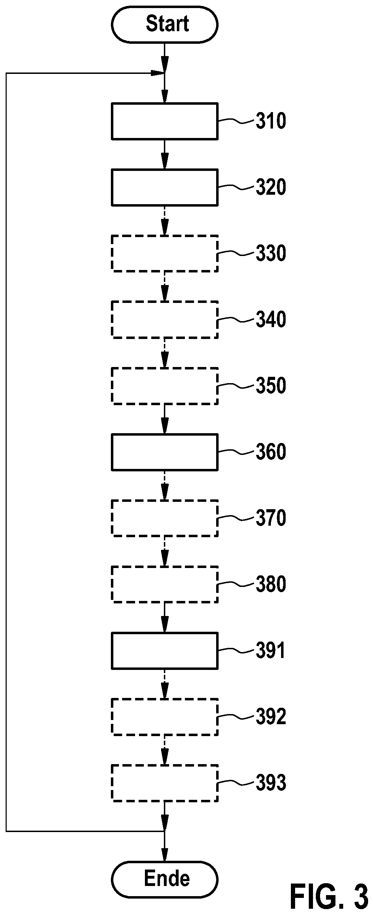

In Figur 3 ist ein Ablaufdiagramm des Verfahrens dargestellt. Im ersten Schritt 310 wird die aktuelle Geschwindigkeit des Fahrzeugs mittels des Geschwindigkeitssensors 102 erfasst.

Anschließend erfolgt eine Erfassung 320 einer der den Strömungswiderstand des Fahrzeugs 100 mit dem Fahrer in Fahrtrichtung repräsentierenden Stirnflächengröße A. Die Erfassung 320 kann durch eine Erfassung einer ersten Eingabe des Fahrers mittels der Eingabevorrichtung 111 oder durch ein Auslesen des Speichers 203 erfolgen. In einer alternativen Ausgestaltung erfolgt die Erfassung 320 der Stirnflächengröße A durch eine Erfassung eines Gewichts des Fahrers mittels mindestens eines Gewichtssensors bzw. Drucksensors, welcher beispielsweise am Sattel 115 und/oder am Lenker des Elektrofahrrads 100 angeordnet ist. In einer Weiterführung sind ein Gewichtssensor am Sattel 115 und ein Gewichtssensor am Lenker angeordnet, wodurch das absolute Gewicht des Fahrers und eine Sitzposition des Fahrers bestimmt werden sowie eine den Strömungswiderstand des Fahrzeugs 100 mit dem Fahrer in Fahrtrichtung repräsentierende Stirnflächengröße A ermittelt wird.

In einem nachfolgenden Schritt 360 wird eine aktuelle Lage des Windschattens des Elektrofahrrads 100 in Abhängigkeit der erfassten Geschwindigkeit und der erfassten Stirnflächengröße A mittels des Steuergeräts 101 ermittelt. Die Ermittlung 360 der aktuellen Lage des Windschattens des Elektrofahrrads 100 kann gemäß bekannter physikalischer Modelle zur Bestimmung des Windschattens erfolgen, wobei bevorzugt einfache Modelle zur Ermittlung 360 angewendet werden. Für eine vereinfachte Form des Windschattens kann beispielsweise ein Rechteck angenommen werden. Die Breite B des rechteckigen Windschattens kann in Abhängigkeit der Breite eines Lenkers des Elektrofahrrads 100 ermittelt werden bzw. dieser beispielsweise entsprechen. Die Ermittlung 360 der Länge L des rechteckigen Windschattens kann beispielsweise nach Gleichung 1 durchgeführt werden, wobei a und c fahrradspezifische Konstanten sind, beispielsweise liegt a im Bereich zwischen a=0,1 $s^2$/m und 10 $s^2$/m, bevorzugt a=1 $s^2$/m, und c im Bereich zwischen c=0,1 und 10, bevorzugt c=1. Die Länge L ist gemäß Gleichung 1 abhängig von der Geschwindigkeit v und der erfassten Stirnflächengröße A. Die Konstanten d und e sind fahrradspezifische Kalibrierparameter, beispielsweise liegt d im Bereich zwischen d=-2 und 20 $s^2$/m, bevorzugt d=2, und beispielsweise liegt e im Bereich zwischen e=-1 und 10 $s^2$/m, bevorzugt e=1.

$$L = a \cdot v^d + c \cdot \left(\frac{A}{B}\right)^e \qquad (1)$$

In einem optionalen Schritt 330 wird die mindestens eine aktuelle Windgröße erfasst, wobei die Ermittlung 360 der Lage des Windschattens zusätzlich in Abhängigkeit der erfassten Windgröße erfolgt. Beispielsweise wird vereinfacht erneut eine rechteckige Form des Windschattens angenommen. Die Lage des rechteckigen Windschattens verschiebt sich in Abhängigkeit der Windrichtung $\alpha$ seitlich, wobei gemäß Gleichung 2 ein seitlicher Versatz S des Windschattens zur Längsachse des Elektrofahrrads 100 in Abhängigkeit der erfassten Windrichtung a, der Länge L des Windschattens und einer Konstanten f berechnet werden kann, wobei die Konstante f bevorzugt in einem Bereich zwischen f=0 und 10 liegt, besonderes bevorzugt f= 0,3.

$$S = f \cdot \sin \alpha \cdot L \qquad (2)$$

Optional kann beispielsweise gemäß Gleichung 3 die Länge L des Windschattens zusätzlich in Abhängigkeit der erfassten Windstärke W [m/s] und einer weiteren Konstante g bestimmt werden, beispielsweise liegt g im Bereich zwischen e=0,1 s und 5 s, bevorzugt ist a=1 $s^2$/m, c=1, d=2 und e=1 sowie g=0,5 s.

$$L = a \cdot v^d + c \cdot \left(\frac{A}{B}\right)^e + g \cdot W \qquad (3)$$

Es kann außerdem eine Erfassung 340 einer aktuellen Umgebungsgröße, insbesondere des aktuellen Luftdrucks p und/oder der aktuellen Umgebungstemperatur T, vorgesehen sein, wobei in dieser Ausgestaltung der Erfindung die Ermittlung 360 der Lage des Windschattens, insbesondere die Ermittlung der Länge L des Windschattens, zusätzlich in Abhängigkeit der erfassten Umgebungsgröße erfolgt. Bevorzugt erfolgt die Ermittlung der Länge L dabei durch Anpassung der Parameter a und c jeweils in Abhängigkeit des aktuellen Luftdrucks p und/oder der aktuellen Umgebungstemperatur T, d.h. gemäß den Gleichungen a= Funktion (p, T) sowie c= Funktion (p, T)

In einem weiteren Schritt 350 wird ein aktueller Nickwinkel $\beta$ des Elektrofahrrads 100 um die Querachse des Elektrofahrrads 100 mittels eines Nickwinkelsensors 112 erfasst. Die Lage des Windschattens wird in dieser Ausgestaltung zusätzlich in Abhängigkeit des erfassten Nickwinkels $\beta$ ermittelt. Bevorzugt erfolgt die Ermittlung der Länge L dabei durch Anpassung der Parameter a und c jeweils in Abhängigkeit des erfassten Nickwinkels $\beta$, d.h. gemäß den Gleichungen a= Funktion ($\beta$) sowie c= Funktion ($\beta$).

Es kann außerdem in einem Schritt 370 vorgesehen sein, den Navigationshinweis in Abhängigkeit der zweiten Eingabe des Fahrers, des erfassten Kamerabildes und/oder von den empfangenen Navigationsdaten zu bestimmen.

Optional kann des Weiteren eine Erfassung 380 des aktuellen Abstands des Elektrofahrrads 100 zum Verfolger 400 mittels eines Abstandsensors 108 durchgeführt werden.

Anschließend wird eine erste Projizierung 391 der ermittelten Lage des Windschattens in Richtung der Längsachse des Elektrofahrrads 100 nach hinten und in Richtung der Hochachse des Elektrofahrrads 100 nach unten auf den Untergrund 150 der Fahrtstrecke mittels des Projektors 103 durchgeführt. Insbesondere wird durch den Schritt 391 eine Begrenzung der ermittelten Lage auf den Untergrund 150 projiziert. Optional erfolgt eine zweite Projizierung 392 des bestimmten Navigationshinweises und eine dritte Projizierung 393 des erfassten Abstands jeweils in Richtung der Längsachse des Fahrzeugs 100 nach hinten und in Richtung der Hochachse des Fahrzeugs 100 nach unten auf den Untergrund 150 der Fahrtstrecke mittels des Projektors 103. Die projizierte Lage des Windschattens und/oder der projizierte Navigationshinweis und/oder der projizierte Abstand können sich auf dem Untergrund 150 der Fahrtstrecke zumindest teilweise überlappen.

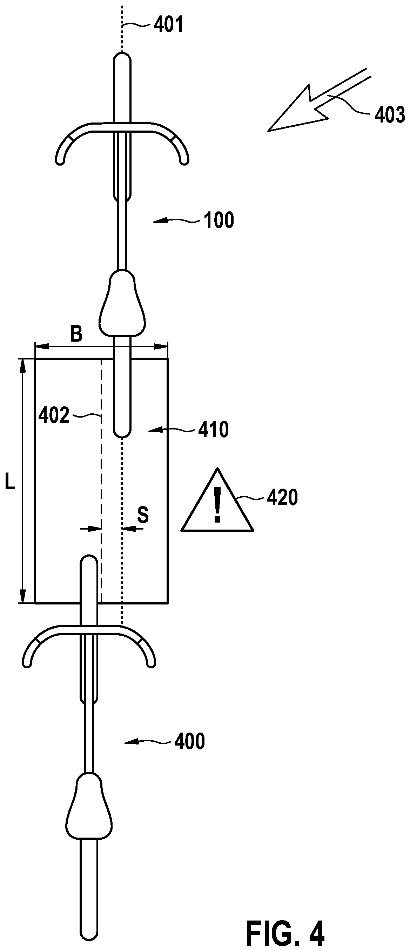

In Figur 4 ist ein Elektrofahrrad 100 sowie ein nachfolgendes Fahrrad bzw. ein Verfolger 400 aus der Vogelperspektive dargestellt. Die Längsachse 401 des Elektrofahrrads 100 ist gepunktet dargestellt. Der Projektor 103 des Elektrofahrrads 100 projiziert die Lage 410 des Windschattens des Elektrofahrrads 100 in Richtung der Längsachse 401 des Fahrzeugs 100 nach hinten und in Richtung der Hochachse des Fahrzeugs 100 nach unten auf den Untergrund 150 der Fahrtstrecke. Zusätzlich wird mittels des Projektors 103 als Navigationshinweis ein Warndreieck 420 auf den Untergrund 150 der Fahrtstrecke projiziert. In diesem Beispiel wird vereinfacht ein rechteckiger Windschatten 410 angenommen. Die Länge L des Windschattens 410 und die Breite B des Windschattens 410 sowie der seitliche Versatz S des Windschattens 410 sind in Figur 4 dargestellt. Der seitliche Versatz S ist der kürzeste Abstand zwischen der Mittellinie 402 (gestrichelt dargestellt) des angenommenen, rechteckigen Windschattens 410 und der Längsachse 401 des Elektrofahrrads 100, wobei der seitliche Versatz S in Abhängigkeit der erfassten Windgröße ermittelt werden kann bzw. aus dem seitlichen Wind 403 resultiert. Zur Ermittlung 360 der Lage des Windschattens 410 werden also in diesem Beispiel die Breite B, die Länge L und der seitliche Versatz S ermittelt.

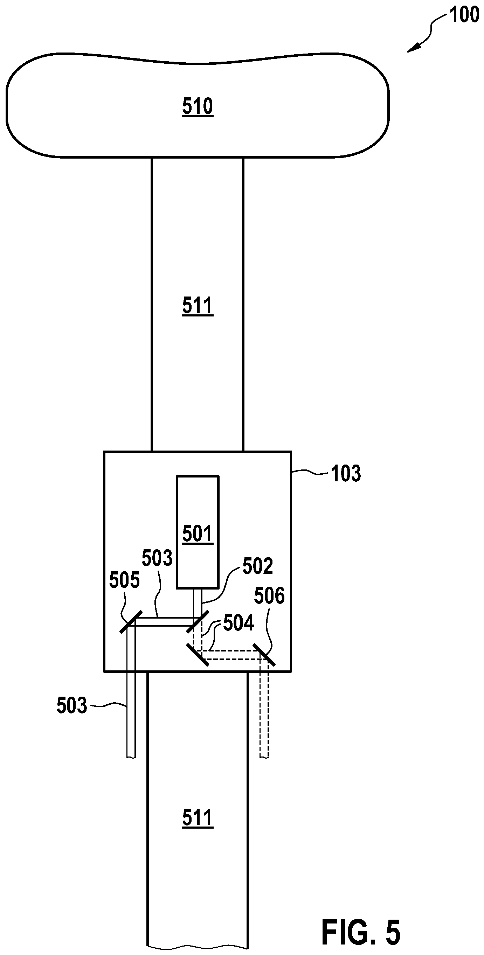

In Figur 5 ist ein Projektor 103 für das Verfahren dargestellt. Der Projektor 103 ist beispielsweise an dem Sattelrohr 511 des Sattels 115 und 510 des Elektrofahrrads 100 angeordnet, wie in Figur 1 dargestellt. Der Projektor 103 ist beispielsweise dazu eingerichtet, die Begrenzung der Lage des Windschattens auf den Untergrund 150 der Fahrtstrecke zu projizieren. Der Projektor 103 umfasst dazu zum Beispiel einen Laser 501. Das Laserlicht 502 kann als Strahl über einen halbdurchlässigen Spiegel in zwei Laserstrahlen geteilt werden. Ein resultierender erster Laserstrahl 503 und/oder ein resultierender zweiter Laserstrahl 504 können jeweils mittels wenigstens einem verstellbaren und ansteuerbaren Mikrospiegel bzw. mikromechanischen Spiegel 505 und 506 geführt werden. Bevorzugt sind mindestens zwei Mikrospiegel 505 und 506 vorgesehen. Mittels des ersten und zweiten Mikrospiegels 505 und 506 lassen sich der erste und zweite Laserstrahl 503 und 504 zur ersten Projizierung der Begrenzung der Lage des Windschattens einstellen.

Alternativ kann ein LED-Projektor als Projektor 103 verwendet werden. Der LED-Projektor 103 ist dazu eingerichtet, die Lage des Windschattens und den Navigationshinweis sowie den Abstand auf den Untergrund 150 der Fahrtstrecke zu projizieren.

**Patentansprüche**

1. Verfahren zur Darstellung einer aktuellen Lage eines Windschattens eines Fahrzeugs (100), insbesondere eines Elektrofahrrads, wobei das Fahrzeug (100) mindestens einen Geschwindigkeitssensor (102), ein Steuergerät (101) und einen Projektor (103) aufweist, wobei das Verfahren wenigstens die folgenden Schritte umfasst

   • Erfassung (310) einer aktuellen Geschwindigkeit des Fahrzeugs (100) mittels des Geschwindigkeitssensors (102),
   • Erfassung (320) einer den Strömungswiderstand in Fahrtrichtung repräsentierenden Stirnflächengröße (A) des Fahrzeugs (100),
   • Ermittlung (360) der aktuellen Lage des Windschattens des Fahrzeugs (100) in Abhängigkeit der erfassten Geschwindigkeit und der erfassten Stirnflächengröße (A) mittels des Steuergeräts (101), und
   • erste Projizierung (391) der ermittelten Lage des Windschattens, insbesondere einer Begrenzung der ermittelten Lage, in Richtung der Längsachse des Fahrzeugs (100) nach hinten und in Richtung der Hochachse des Fahrzeugs (100) nach unten auf einen Untergrund (150) einer Fahrtstrecke mittels des Projektors (103).

2. Verfahren nach Anspruch 1, **dadurch gekennzeichnet, dass** das Verfahren den folgenden Schritt aufweist

   • Erfassung (330) mindestens einer aktuellen Windgröße, insbesondere einer aktuellen Windstärke und/oder einer aktuellen Windrichtung, mittels eines Windsensors (104), wobei

• die Ermittlung (360) der Lage des Windschattens zusätzlich in Abhängigkeit der erfassten Windgröße erfolgt.

3. Verfahren nach einem der Ansprüche 1 oder 2, **dadurch gekennzeichnet, dass** das Verfahren den folgenden Schritt aufweist

• Erfassung (340) einer aktuellen Umgebungsgröße, insbesondere eines aktuellen Luftdrucks und/oder einer aktuellen Umgebungstemperatur, wobei
• die Ermittlung (360) der Lage des Windschattens zusätzlich in Abhängigkeit der erfassten Umgebungsgröße erfolgt.

4. Verfahren nach einem der vorhergehenden Ansprüche, **dadurch gekennzeichnet, dass** das Verfahren den folgenden Schritt aufweist

• Erfassung (350) eines aktuellen Nickwinkels des Fahrzeugs (100) um die Querachse des Fahrzeugs (100) mittels eines Nickwinkelsensors (112), wobei
• die Ermittlung (360) der Lage des Windschattens zusätzlich in Abhängigkeit des erfassten Nickwinkels erfolgt.

5. Verfahren nach einem der vorhergehenden Ansprüche, **dadurch gekennzeichnet, dass** das Verfahren die folgenden Schritte aufweist

• Bestimmung (370) eines Navigationshinweises in Abhängigkeit

i. einer zweiten Eingabe des Fahrers, und/oder
ii. eines erfassten Kamerabildes, wobei das Kamerabild mittels einer Kamera (105) am Fahrzeug erfasst wird, und/oder
iii. von Navigationsdaten, und

• zweite Projizierung (392) des bestimmten Navigationshinweises in Richtung der Längsachse des Fahrzeugs (100) nach hinten und in Richtung der Hochachse des Fahrzeugs (100) nach unten auf den Untergrund (150) einer Fahrtstrecke mittels des Projektors (103).

6. Verfahren nach einem der vorhergehenden Ansprüche, **dadurch gekennzeichnet, dass** das Verfahren den folgenden Schritt aufweist

• Erfassung (380) eines aktuellen Abstands des Fahrzeugs (100) zu einem Verfolger (400) mittels eines Abstandsensors (108), und
• dritte Projizierung (393) des erfassten Abstands in Richtung der Längsachse des Fahrzeugs (100) nach hinten und in Richtung der Hochachse des Fahrzeugs (100) nach unten auf einen Untergrund (150) einer Fahrtstrecke mittels des Projektors (103).

7. Verfahren nach einem der vorhergehenden Ansprüche, **dadurch gekennzeichnet, dass** die projizierte Lage des Windschattens, der projizierte Navigationshinweis und/oder der projizierte Abstand auf dem Untergrund (150) der Fahrtstrecke zumindest teilweise überlappen.

8. Steuergerät (101) zur Darstellung einer aktuellen Lage des Windschattens eines Fahrzeugs (100), wobei das Steuergerät (101) mindestens eine Recheneinheit (201) umfasst, wobei die Recheneinheit (201) mindestens

• ein erstes Sensorsignal erfasst, wobei das erste Sensorsignal eine aktuelle Geschwindigkeit des Fahrzeugs (100) repräsentiert,
• eine den Strömungswiderstand in Fahrtrichtung repräsentierende Stirnflächengröße (A) des Fahrzeugs (100) erfasst,
• eine Lage des Windschattens in Abhängigkeit des erfassten ersten Sensorsignals und des erfassten ersten Eingabesignals ermittelt, und
• ein Steuersignal zur Ansteuerung des Projektors (103) in Abhängigkeit der ermittelten Lage des Windschattens erzeugt, wobei eine erste Projizierung (391) der ermittelten Lage des Windschattens, insbesondere einer Begrenzung der ermittelten Lage, in Richtung der Längsachse des Fahrzeugs (100) nach hinten und in Richtung der Hochachse des Fahrzeugs (100) nach unten auf einen Untergrund (150) einer Fahrtstrecke mittels des Projektors (103) erfolgt.

9. Steuergerät (101) nach Anspruch 8, **dadurch gekennzeichnet, dass** die Recheneinheit (201)

• wenigstens ein zweites Sensorsignal erfasst, wobei das zweite Sensorsignal eine aktuelle Windgröße und/oder eine aktuelle Umgebungstemperatur und/oder einen aktuellen Luftdruck repräsentiert, wobei die Recheneinheit (201)
• die Lage des Windschattens zusätzlich in Abhängigkeit des wenigstens einen erfassten zweiten Sensorsignals ermittelt.

10. Steuergerät (101) nach einem der Ansprüche 8 oder 9, **dadurch gekennzeichnet, dass** die Recheneinheit (201)

• einen Navigationshinweis in Abhängigkeit

i. einer zweiten Eingabe des Fahrers, und/oder
ii. eines erfassten Kamerabildes, wobei das Kamerabild mittels einer Kamera (105) am Fahrzeug erfasst wird, und/oder
iii. von Navigationsdaten
bestimmt, wobei die Recheneinheit (201)

• das Steuersignal zur Ansteuerung des Projektors (103) in Abhängigkeit des bestimmten Navigationshinweises anpasst.

11. Steuergerät (101) nach einem der Ansprüche 8 bis 10, **dadurch gekennzeichnet, dass** die Recheneinheit (201)

• ein drittes Sensorsignal erfasst, wobei das dritte Sensorsignal einen aktuellen Abstand des Fahrzeugs (100) zu einem Verfolger (400) repräsentiert, wobei die Recheneinheit (201)
• das Steuersignal zur Ansteuerung des Projektors (103) in Abhängigkeit des dritten Sensorsignals anpasst.

12. Steuergerät (101) nach einem der Ansprüche 8 bis 11, **dadurch gekennzeichnet, dass** das Steuergerät (101) folgende Komponenten aufweist

• einen Ortssensor (110), wobei der Ortssensor (110) dazu eingerichtet ist, die aktuellen geografischen Koordinaten des Fahrzeugs (100) zu erfassen, und
• eine Empfangsvorrichtung (202), wobei die Empfangsvorrichtung (202) dazu eingerichtet ist, Serverdaten zur aktuellen Umgebungstemperatur, zum aktuellen Luftdruck und/oder zu aktuellen Navigationsdaten von einer Servereinrichtung in Abhängigkeit der erfassten geografischen Koordinaten des Fahrzeugs (100) zu empfangen.

13. Fahrzeug (100), insbesondere Elektrofahrrad, mindestens aufweisend

• einen Geschwindigkeitssensor (102), wobei der Geschwindigkeitssensor (102) dazu eingerichtet ist, eine aktuelle Geschwindigkeit des Fahrzeugs (100) zu erfassen,
• einen Projektor (103), wobei der Projektor (103) dazu eingerichtet ist, wenigstens eine aktuelle Lage des Windschattens des Fahrzeugs (100) in Richtung der Längsachse des Fahrzeugs (100) nach hinten und in Richtung der Hochachse des Fahrzeugs (100) nach unten auf den Untergrund (150) der Fahrtstrecke zu projizieren, und
• ein Steuergerät (101) zur Ansteuerung des Projektors nach einem der Ansprüche 8 bis 12.

14. Fahrzeug (100), nach Anspruch 13, **dadurch gekennzeichnet, dass** der Projektor (103) zumindest einen einstellbaren mikromechanischen Spiegel (505, 506) zur Projizierung (391) der ermittelten Lage des Windschattens aufweist.

15. Fahrzeug (100) nach einem der Ansprüche 13 oder 14, **dadurch gekennzeichnet, dass** das Fahrzeug (100) wenigstens eine der folgenden Komponenten aufweist

• eine Eingabevorrichtung (111), wobei die Eingabevorrichtung (111) dazu eingerichtet ist, wenigstens eine erste Eingabe einer den Strömungswiderstand des Fahrzeugs (100) mit dem Fahrer repräsentierenden Stirnflächengröße (A) zu erfassen, und/oder
• ein Windsensor (104), wobei der Windsensor (104) dazu eingerichtet ist, wenigstens eine aktuelle Windrichtung und/oder eine aktuelle Windstärke zu erfassen, und/oder

• ein Nickwinkelsensor (112), wobei der Nickwinkelsensor (112) dazu eingerichtet ist, einen aktuellen Nickwinkel des Fahrzeugs (100) um die Querachse des Fahrzeugs (100) zu erfassen, und/oder

• ein Temperatursensor (106), wobei der Temperatursensor (106) dazu eingerichtet ist, eine aktuelle Umgebungstemperatur zu erfassen, und/oder

• ein Luftdrucksensor (107), wobei der Luftdrucksensor (107) dazu eingerichtet ist, einen aktuellen Luftdruck zu erfassen, und/oder

• ein Ortssensor (110), wobei der Ortssensor (110) dazu eingerichtet ist, die aktuellen geografischen Koordinaten des Fahrzeugs (100) zu erfassen, und/oder

• ein Abstandssensor (108), wobei der Abstandssensor (108) dazu eingerichtet ist, einen aktuellen Abstand des Fahrzeugs (100) zu einem in Richtung der Längsachse nachfolgenden Fahrzeug, d.h. einem Verfolger (400), zu erfassen, und/oder

• eine Anzeigevorrichtung (109), wobei die Anzeigevorrichtung (109) dazu eingerichtet ist, dem Fahrer des Fahrzeugs (100) zumindest eine der nachfolgenden Größen anzuzeigen: die erfasste Geschwindigkeit, den erfassten Nickwinkel, die erfasste Windstärke, die erfasste Windrichtung, den erfassten Luftdruck, die erfasste Umgebungstemperatur, die ermittelte Lage des Windschattens, die erfassten geografischen Koordinaten, bestimmte Navigationsdaten und/oder den erfassten Abstand zum Verfolger (400)..

**Claims**

1. Method for displaying a current position of a slipstream of a vehicle (100), in particular of an electric bicycle, wherein the vehicle (100) has at least one speed sensor (102), a control unit (101) and a projector (103), wherein the method comprises at least the following steps:

   • detecting (310) a current speed of the vehicle (100) by means of the speed sensor (102),
   • detecting (320) a size (A) of the front face of the vehicle (100) representing the flow resistance in the direction of travel,
   • determining (360) the current position of the slipstream of the vehicle (100) in accordance with the detected speed and the detected size (A) of the front face by means of the control unit (101), and
   • first projection (391) of the determined position of the slipstream, in particular of a boundary of the determined position, rearward in the direction of the longitudinal axis of the vehicle (100) and downward onto an underlying surface (150) of a section of route in the direction of the vertical axis of the vehicle (100) by means of the projector (103).

2. Method according to Claim 1, **characterized in that** the method has the following step:

   • detecting (330) at least one current wind variable, in particular a current wind strength, and/or a current wind direction by means of a wind sensor (104), wherein
   • the determination (360) of the position of the slipstream is additionally carried out in accordance with the detected wind variable.

3. Method according to one of Claims 1 and 2, **characterized in that** the method has the following step:

   • detecting (340) a current ambient variable, in particular a current air pressure, and/or a current ambient temperature,
   wherein
   • the determination (360) of the position of the slipstream is additionally carried out in accordance with the detected ambient variable.

4. Method according to one of the preceding claims, **characterized in that** the method has the following step:

   • detecting (350) a current pitching angle of the vehicle (100) about the transverse axis of the vehicle (100) by means of a pitching angle sensor (112), wherein
   • the determination (360) of the position of the slipstream is additionally carried out in accordance with the detected pitching angle.

5. Method according to one of the preceding claims, **characterized in that** the method has the following steps:

• determining (370) a navigation instruction in accordance with

  i. a second input by the driver, and/or
  ii. a captured camera image, wherein the camera image is captured by means of a camera (105) on the vehicle, and/or
  iii. navigation data, and

• a second projection (392) of the determined navigation instruction rearward in the direction of the longitudinal axis of the vehicle (100) and downward onto the underlying surface (150) of a section of route in the direction of the vertical axis of the vehicle (100) by means of the projector (103).

6. Method according to one of the preceding claims, **characterized in that** the method has the following step:

  • detecting (380) a current distance of the vehicle (100) from a following vehicle (400) by means of a distance sensor (108), and
  • a third projection (393) of the detected distance rearward in the direction of the longitudinal axis of the vehicle (100) and downward onto an underlying surface (150) of a section of route in the direction of the vertical axis of the vehicle (100) by means of the projector (103).

7. Method according to one of the preceding claims, **characterized in that** the projected position of the slipstream, the projected navigation instruction, and/or the projected distance on the underlying surface (150) of the section of route at least partially overlap.

8. Control unit (101) for displaying a current position of the slipstream of a vehicle (100), wherein the control unit (101) comprises at least one computing unit (201), wherein the computing unit (201) at least

  • detects the first sensor signal, wherein the first sensor signal represents a current speed of the vehicle (100),
  • detects a size (A) of the front face of the vehicle (100) which represents the flow resistance in the direction of travel,
  • determines a position of the slipstream in accordance with the detected first sensor signal and the detected first input signal, and
  • generates a control signal for actuating the projector (103) in accordance with the determined position of the slipstream, wherein the first projection (391) of the determined position of the slipstream, in particular of a boundary of the determined position, is implemented rearward in the direction of the longitudinal axis of the vehicle (100) and downward onto an underlying surface (150) of a section of a route in the direction of the vertical axis of the vehicle (100) by means of the projector (103).

9. Control unit (101) according to Claim 8, **characterized in that** the computing unit (201)

  • detects at least a second sensor signal, wherein the second sensor signal represents a current wind variable, and/or a current ambient temperature, and/or a current air pressure, wherein the computing unit (201)
  • additionally determines the position of the slipstream in accordance with the at least one detected second sensor signal.

10. Control unit (101) according to one of Claims 8 and 9, **characterized in that** the computing unit (201)

  • determines a navigation instruction in accordance with

    i. a second input of the driver, and/or
    ii. a detected camera image wherein the camera image is captured by means of a camera (105) on the vehicle, and/or
    iii. navigation data,
    wherein the computing unit (201)

  • adapts the control signal to actuate the projector (103) in accordance with the determined navigation instruction.

11. Control unit (101) according to one of Claims 8 to 10, **characterized in that** the computing unit (201)

• detects a third sensor signal, wherein the third sensor signal represents a current distance of the vehicle (100) from a following vehicle (400), wherein the computing unit (201)
• adapts the control signal to actuate the projector (103) in accordance with the third sensor signal.

12. Control unit (101) according to one of Claims 8 to 11, **characterized in that** the control unit (101) has the following components:

• a position sensor (110), wherein the position sensor (110) is configured to detect the current geographic components of the vehicle (100), and
• a receiver device (202), wherein the receiver device (202) is configured to receive server data relating to the current ambient temperature, to the current air pressure and/or to current navigation data from a server device in accordance with the detected geographic coordinates of the vehicle (100).

13. Vehicle (100), in particular electric bicycle, having at least:

• a speed sensor (102), wherein the speed sensor (102) is configured to detect a current speed of the vehicle (100),
• a projector (103), wherein the projector (103) is configured to project at least one current position of the slipstream of the vehicle (100) rearward in the direction of the longitudinal axis of the vehicle (100) and downward onto the underlying surface (150) of the section of a route in the direction of the vertical axis of the vehicle (100), and
• a control unit (101) for actuating the projector according to one of Claims 8 to 12.

14. Vehicle (100) according to Claim 13, **characterized in that** the projector (103) has at least one adjustable, micromechanical mirror (505, 506) for projecting (391) the determined position of the slipstream.

15. Vehicle (100) according to one of Claims 13 and 14, **characterized in that** the vehicle (100) has at least one of the following components:

• an input device (111), wherein the input device (111) is configured to detect at least a first variable of a size (A) of the front face representing the flow resistance of the vehicle (100) with the driver, and/or
• a wind sensor (104), wherein the wind sensor (104) is configured to detect at least a current wind direction and/or a current wind strength, and/or
• a pitching angle sensor (112), wherein the pitching angle sensor (112) is configured to detect a current pitching angle of the vehicle (100) about the transverse axis of the vehicle (100), and/or
• a temperature sensor (106), wherein the temperature sensor (106) is configured to detect a current ambient temperature,
and/or
• an air pressure sensor (107), wherein the air pressure sensor (107) is configured to detect current air pressure, and/or
• a location sensor (110), wherein the location sensor (110) is configured to detect the current geographic coordinates of the vehicle (100), and/or
• a distance sensor (108), wherein the distance sensor (108) is configured to detect a current distance of the vehicle (100) from a vehicle following in the direction of the longitudinal axis, i.e. a following vehicle (400), and/or
• a display device (109), wherein the display device (109) is configured to display at least one of the following variables to the driver of the vehicle (100): the detected speed, the detected pitching angle, the detected wind strength, the detected wind direction, the detected air pressure, the detected ambient temperature, the determined position of the slipstream, the detected geographic coordinates, determined navigation data and/or the detected distance from the following vehicle (400).

**Revendications**

1. Procédé de représentation d'une position actuelle d'un sillage d'un véhicule (100), notamment d'une bicyclette électrique, le véhicule (100) possédant au moins un détecteur de vitesse (102), un contrôleur (101) et un projecteur (103), le procédé comprenant au moins les étapes suivantes

* acquisition (310) d'une vitesse actuelle du véhicule (100) à l'aide du détecteur de vitesse (102),

* acquisition (320) d'une taille de face frontale (A) du véhicule (100) qui représente la résistance à l'écoulement dans le sens du déplacement,
* détermination (360) de la position actuelle du sillage du véhicule (100) en fonction de la vitesse acquise et de la taille de face frontale (A) acquise au moyen du contrôleur (101), et
* première projection (391) de la position déterminée du sillage, notamment d'une délimitation de la position déterminée, dans la direction de l'axe longitudinal du véhicule (100) vers l'arrière et dans la direction de l'axe de hauteur du véhicule (100) vers le bas sur un sol (150) d'un trajet au moyen du projecteur (103).

2. Procédé selon la revendication 1, **caractérisé en ce que** le procédé comprend l'étape suivante

* acquisition (330) d'au moins une grandeur de vent actuelle, notamment une force de vent actuelle et/ou une direction de vent actuelle, au moyen d'un détecteur de vent (104),
* la détermination (360) de la position du sillage s'effectuant en plus en fonction de la grandeur de vent acquise.

3. Procédé selon l'une des revendications 1 ou 2, **caractérisé en ce que** le procédé comprend l'étape suivante

* acquisition (340) d'une grandeur d'environnement actuelle, notamment d'une pression atmosphérique actuelle et/ou d'une température ambiante actuelle,
* la détermination (360) de la position du sillage s'effectuant en plus en fonction de la grandeur d'environnement acquise.

4. Procédé selon l'une des revendications précédentes, **caractérisé en ce que** le procédé comprend l'étape suivante

* acquisition (350) d'un angle d'inclinaison actuel du véhicule' (100) autour de l'axe transversal du véhicule (100) au moyen d'un capteur d'angle d'inclinaison (112),
* la détermination (360) de la position du sillage s'effectuant en plus en fonction de l'angle d'inclinaison acquis.

5. Procédé selon l'une des revendications précédentes, **caractérisé en ce que** le procédé comprend les étapes suivantes

* définition (370) d'une consigne de navigation en fonction

   i d'une deuxième saisie du conducteur, et/ou
   ii d'une image de caméra acquise, l'image de caméra étant acquise au moyen d'une caméra (105) sur le véhicule, et/ou
   iii de données de navigation, et

* deuxième projection (392) de la consigne de navigation définie dans la direction de l'axe longitudinal du véhicule (100) vers l'arrière et dans la direction de l'axe de hauteur du véhicule (100) vers le bas sur un sol (150) d'un trajet au moyen du projecteur (103).

6. Procédé selon l'une des revendications précédentes, **caractérisé en ce que** le procédé comprend l'étape suivante

* acquisition (380) d'une distance actuelle du véhicule (100) par rapport à un suiveur (400) au moyen d'un détecteur de distance (108), et
* troisième projection (393) de la distance acquise dans la direction de l'axe longitudinal du véhicule (100) vers l'arrière et dans la direction de l'axe de hauteur du véhicule (100) vers le bas sur un sol (150) d'un trajet au moyen du projecteur (103).

7. Procédé selon l'une des revendications précédentes, **caractérisé en ce que** la position projetée du sillage, la consigne de navigation projetée et/ou la distance projetée sur le sol (150) du trajet se chevauchent au moins partiellement.

8. Contrôleur (101) pour la représentation d'une position actuelle du sillage d'un véhicule (100), le contrôleur (101) comprenant au moins une unité de calcul (201), l'unité de calcul (201) au moins

* acquérant un premier signal de détecteur, le premier signal de détecteur représentant une vitesse actuelle du véhicule (100),

* acquérant une taille de face frontale (A) du véhicule (100) qui représente la résistance à l'écoulement dans le sens du déplacement,
* déterminant une position du sillage en fonction du premier signal de détecteur acquis et du premier signal de saisie acquise, et
* générant un signal de commande destiné à asservir le projecteur (103) en fonction de la position déterminée du sillage, la première projection (391) de la position déterminée du sillage, notamment d'une délimitation de la position déterminée, s'effectuant dans la direction de l'axe longitudinal du véhicule (100) vers l'arrière et dans la direction de l'axe de hauteur du véhicule (100) vers le bas sur un sol (150) d'un trajet au moyen du projecteur (103).

9. Contrôleur (101) selon la revendication 8, **caractérisé en ce que** l'unité de calcul (201)

   * acquiert au moins un deuxième signal de détecteur, le deuxième signal de détecteur représentant au moins une grandeur de vent actuelle et/ou une température ambiante actuelle et/ou une pression atmosphérique actuelle, l'unité de calcul (201)
   * déterminant la position du sillage en plus en fonction de l'au moins un deuxième signal de détecteur acquis.

10. Contrôleur (101) selon l'une des revendications 8 ou 9, **caractérisé en ce que** l'unité de calcul (201)

    * définit une consigne de navigation en fonction

       i d'une deuxième saisie du conducteur, et/ou
       ii d'une image de caméra acquise, l'image de caméra étant acquise au moyen d'une caméra (105) sur le véhicule, et/ou
       iii de données de navigation,
       l'unité de calcul (201)

    * adaptant le signal de commande destiné à asservir le projecteur (103) en fonction de la consigne de navigation définie.

11. Contrôleur (101) selon l'une des revendications 8 à 10, **caractérisé en ce que** l'unité de calcul (201)

    * acquiert un troisième signal de détecteur, le troisième signal de détecteur représentant une distance actuelle du véhicule (100) par rapport à un suiveur (400), l'unité de calcul (201)
    * adaptant le signal de commande destiné à asservir le projecteur (103) en fonction du troisième signal de détecteur.

12. Contrôleur (101) selon l'une des revendications 8 à 11, **caractérisé en ce que** le contrôleur (101) possède les composants suivants

    * un détecteur d'emplacement (110), le détecteur d'emplacement (110) étant conçu pour acquérir les coordonnées géographiques actuelles du véhicule (100), et
    * un dispositif de réception (202), l'arrangement de réception (202) étant conçu pour recevoir des données de serveur à propos de la température ambiante actuelle, à propos de la pression atmosphérique actuelle et/ou à propos de données de navigation actuelles de la part d'un appareil serveur en fonction des coordonnées géographiques actuelles acquises du véhicule (100).

13. Véhicule (100), notamment d'une bicyclette électrique, possédant au moins

    * un détecteur de vitesse (102), le détecteur de vitesse (102) étant conçu pour acquérir une vitesse actuelle du véhicule (100),
    * un projecteur (103), le projecteur (103) étant conçu pour projeter une position actuelle du sillage du véhicule (100) dans la direction de l'axe longitudinal du véhicule (100) vers l'arrière et dans la direction de l'axe de hauteur du véhicule (100) vers le bas sur un sol (150) du trajet, et
    * un contrôleur (101) destiné à l'asservissement du projecteur selon l'une des revendications 8 à 12.

14. Véhicule (100) selon la revendication 13, **caractérisé en ce que** le projecteur (103) possède au moins un miroir micromécanique (505, 506) réglable destiné à projeter (391) la position déterminée du sillage.

**15.** Véhicule (100) selon l'une des revendications 13 ou 14, **caractérisé en ce que** le véhicule (100) possède au moins l'un des composants suivants

* un dispositif de saisie (111), le dispositif de saisie (111) étant conçu pour acquérir au moins une première saisie d'une taille de face frontale (A) qui représente la résistance à l'écoulement du véhicule (100) avec le conducteur, et/ou

* un détecteur de vent (104), le détecteur de vent (104) étant conçu pour acquérir au moins une direction de vent actuelle et/ou une force de vent actuelle, et/ou * un détecteur d'angle d'inclinaison (112), le détecteur d'angle d'inclinaison (112) étant conçu pour acquérir un angle d'inclinaison actuel du véhicule (100) autour de l'axe transversal du véhicule (100), et/ou

* une sonde de température (106), la sonde de température (106) étant conçue pour acquérir une température ambiante actuelle, et/ou

* un détecteur de pression atmosphérique (107), le détecteur de pression atmosphérique (107) étant conçu pour acquérir une pression atmosphérique actuelle, et/ou

* un détecteur d'emplacement (110), le détecteur d'emplacement (110) étant conçu pour acquérir les coordonnées géographiques actuelles du véhicule (100), et/ou

* un détecteur de distance (108), le détecteur de distance (108) étant conçu pour acquérir une distance actuelle du véhicule (100) par rapport à un véhicule suivant dans la direction de l'axe longitudinal, c'est-à-dire un suiveur (400), et/ou

* un dispositif d'affichage (109), le dispositif d'affichage (109) étant conçu pour afficher à l'attention du conducteur du véhicule (100) au moins l'une des grandeurs suivantes : la vitesse acquise, l'angle d'inclinaison acquis, la force de vent acquise, la direction de vent acquise, la pression atmosphérique acquise, la température ambiante acquise, la position déterminée du sillage, les coordonnées géographiques acquises, les données de navigation définies et/ou la distance acquise par rapport au suiveur (400).

FIG. 1

EP 3 367 064 B1

**FIG. 2**

FIG. 3

**FIG. 4**

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011076574 A1

- US 20100283590 A